# EUROPÄISCHE PATENTSCHRIFT

(11) **EP 2 813 795 B1**
(45) Veröffentlichungstag und Bekanntmachung des Hinweises auf die Patenterteilung: **04.05.2016**
(21) Anmeldenummer: 14171881.7
(22) Anmeldetag: 11.06.2014
(51) Int. Cl.: F41G 1/38

(54) **Fernoptisches Gerät**
Long range optical device
Instrument de télé-optique

(30) Priorität: 12.06.2013 AT 503832013
(43) Veröffentlichungstag der Anmeldung: 17.12.2014
(73) Patentinhaber: SWAROVSKI OPTIK KG, 6067 Absam (AT)
(72) Erfinder: Sigmund, Georg, 6176 Völs (AT)
(74) Vertreter: Burger, Hannes

(56) Entgegenhaltungen:
- EP-A2- 1 431 699
- EP-B2- 0 654 650
- US-A1- 2008 002 266

## Beschreibung

Fernoptische Geräte sind zum Beispiel aus US 2008/0002266 A1 bekannt. Sie beinhalten ein fernoptisches Gerät, insbesondere Zielfernrohr, mit einem äußeren Gehäuse, in dem zwischen Objektiv und Okular ein Umkehrsystem angeordnet ist, und mit einem Verstellmechanismus zur Verstellung der Visierlinie durch Verstellung zumindest eines optischen Bauteils innerhalb des äußeren Gehäuses und mit einem auf das optische Bauteil wirkenden Rückstellmechanismus, der zur Erzeugung der Rückstellkraft zumindest eine Feder umfasst.

Bei fernoptischen Geräten, insbesondere Zielfernrohren, wie sie beispielsweise für Schusswaffen verwendet werden, wird das anvisierte Ziel in der Objektivebene seitenverkehrt und auf dem Kopf stehend abgebildet. Ein zwischen Objektiv und Okular angeordnetes Umkehrsystem richtet das Bild auf und bildet es in der Okularebene, wo es betrachtet wird, ab. Das Umkehrsystem umfasst üblicherweise zumindest zwei optische Elemente, z.B. so genannten Kittlinsen, die im Abstand voneinander angeordnet sind. Die optischen Elemente des Umkehrsystems sind in einem inneren Gehäuse, auch Fassung oder Hilfstubus genannt, zusammengefasst. Das Umkehrsystem bildet somit eine bauliche Einheit, die innerhalb des fernoptischen Gerätes beweglich gelagert ist.

Bei fernoptischen Geräten wie Zielfernrohren, insbesondere zum Einsatz in Gewehren, ist ein Absehen (Fadenkreuz, Strichmuster, od.dgl.) als Hilfe zum Anvisieren des Ziels vorgesehen. Das Absehen ist entweder in der objektivseitigen (ersten) oder okularseitigen (zweiten) Bildebene angeordnet oder kann auch in den Strahlengang eingespiegelt werden.

Bei Zielfernrohren ist es bekannt, Verstellmechanismen, sogenannte "Türme" vorzusehen, die es erlauben, die Visierlinie im Zielfernrohr in der Vertikalen und/oder in der Horizontalen zu verstellen. Dabei wird üblicherweise entweder das Absehen bzw. die Zielmarke verstellt oder das Objektiv. Damit kann das Zielfernrohr, das z.B. für eine bestimmte Munition auf eine bestimmte Entfernung "eingeschossen" ist, so nachjustiert werden, dass auch bei einer anderen Entfernung und/oder einer anderen Munition zielgenaue Schüsse möglich sind. Ferner können auch andere Störgrößen kompensiert werden, z.B. ein bereits vorhandener Anstellwinkel des Zielfernrohrs, wenn sich das Zielobjekt auf einer anderen Höhe als der Schütze befindet, ferner aber auch Umwelteinflüsse, wie Richtung und Stärke des Windes.

Um am Zielfernrohr Seiten- und Höhenkorrekturen bzw. eine Verstellung der Visierlinie vornehmen zu können, muss das Umkehrsystem bzw. das innere Gehäuse, in dem das Umkehrsystem sitzt, auch quer zur optischen Achse beweglich im Fernrohrtubus gelagert sein. So kann das Umkehrsystem (z.B. mittels eines Kugelgelenks und -(Kegel)pfanne) innerhalb des Fernrohrtubus kippbar gelagert sein. Ein Kugelsitz für das Umkehrsystem ist z.B. aus der EP0654650B2 bekannt. Eine Verstellung quer zur optischen Achse, somit eine Kippung des Umkehrsystems, wird nach dem Stand der Technik durch sogenannte Elevationsschrauben bewirkt, die üblicherweise in rechtem Winkel angeordnet und durch von außen zugängliche Verstelltürme betätigbar sind.

Zur Rückstellung des Umkehrsystems sind im Stand der Technik verschiedene Rückstellmechanismen bekannt.

So ist es bekannt, Spiralfedern im Kugelgelenk axial zu verbauen. Hier besteht jedoch die Gefahr, dass das Kugelgelenk abheben kann. Außerdem variiert die Federkraft stark je nach Position des Umkehrsystems.

Ein anderes System bedient sich Blattfedern, die längs oder quer im Hauptrohr angeordnet direkt auf das Umkehrsystem drücken. Bei einem Einbau quer zum Hauptrohr kann zusätzlich Platz für die Feder durch eine Ausnehmung im Hauptrohr vorgesehen sein.

Ein großer Stellweg ist wegen der Materialeigenschaften schwer zu realisieren. Der Einbau ist schwierig und die Federkraft variiert stark je nach Position des Umkehrsystems.

Ebenfalls bekannt als Rückstellmechanismus ist eine Spiralfeder, die radial im Winkel von 45° im Hauptrohr verbaut ist und direkt auf das Umkehrsystem drückt. Eine derartige Konstruktion ist z.B. aus der US2189766A bekannt. Nachteilig wirkt sich hier aus, dass Platz für die Halterung und Führung der Feder geschaffen und deshalb das Gehäuse erweitert werden muss. Auch hier ist die Federkraft stark abhängig von der Position des Umkehrmechanismus.

Bei ausgefahrenen Verstelltürmen und somit entspannter Feder ist kaum mehr Federkraft vorhanden.

Eine andere Möglichkeit, die Richtung der Visierlinie zu verstellen, besteht darin, das Umkehrsystem innerhalb des Gehäuses fix zu lassen und anstelle dessen das Objektiv innerhalb des Gehäuses schwenkbar bzw. kippbar zu lagern. Eine derartige Möglichkeit wird z.B. in der EP 0 709 705 B1 oder der TW 2008 19711 A offenbart.

Das Ziel der Erfindung besteht darin, die sich aus dem Stand der Technik ergebende Probleme zu lösen und einen Rückstellmechanismus bereitzustellen, bei dem die Rückstellkraft nicht oder zumindest weniger stark von der Position bzw. dem Kippwinkel des optischen Bauteils abhängig ist und dennoch ausreichend groß ist, um jederzeit eine zuverlässige Rückstellung zu gewährleisten. Außerdem soll die Lösung eine platzsparende Anordnung ermöglichen. Insbesondere sollen auch größere Stellwege realisierbar sein. Herstellung, Einbau, Wartung und Austausch sollen einfach und kostengünstig sein, wobei in einer Ausführung auch das nachträgliche Nachrüsten von fernoptischen Geräten möglich sein soll. Die Erfindung bzw. deren Anwendung soll vielseitig einsetzbar, d.h. nicht auf bestimmte (Ziel)Fernrohrtypen beschränkt sein.

Gelöst wird die Aufgabe durch die Merkmale des Patentanspruches 1.

Dabei wirkt die Feder auf den Hebelmechanismus, der aus nur einem oder aus mehreren Hebeln aufgebaut sein kann, und der Hebelmechanismus wirkt wiederum auf das optische Bauteil. Die Feder wirkt also nicht direkt auf das optische Bauteil, sondern unter Vermittlung eines drehbar gelagerten Hebels. Das optische Bauteil, insbesondere in Form eines Umkehrsystems bildet eine bauliche Einheit insofern, als es als Ganzes im äußeren Gehäuse des Fernrohres beweglich gelagert ist. Diese bewegliche Lagerung erlaubt ein Verkippen des optischen Bauteils innerhalb des äußeren Gehäuses. Zu diesem Zweck kann das optische Bauteil über ein Lager, z.B. einen Kugelsitz, im äußeren Gehäuse gelagert sein. Die vom Hebelmechanismus auf das optische Bauteil wirkende Rückstellkraft wirkt dabei quer zur optischen Achse des fernoptischen Gerätes.

Ein weiterer Vorteil liegt im Zusammenhang mit einem Kugelgelenk darin, dass bei einem spielfrei eingestellten Kugelgelenk durch den Hebel nahezu keine axiale Kraft darauf eingeleitet wird, was zu einer Verminderung der Reibung der Kugelflächen führt.

Unter Feder ist jedes Mittel zu verstehen, das unter Belastung nachgibt und bei Entlastung rückstellend wirkt, d.h. in die ursprüngliche Gestalt zurückkehrt. Mögliche Beispiele sind Spiralfeder, Blattfeder, Fluidfeder, Luftfeder, Gummifeder bzw. Federn aus jedem anderen geeigneten Material. Die Feder kann insbesondere als Druckfeder oder als Zugfeder auf den Hebel wirken.

In einer Ausführungsform (bei beweglich gelagertem Umkehrsystem) ist das zumindest eine optische Bauteil, auf den der Verstellmechanismus und der Rückstellmechanismus wirken, das Umkehrsystem.

In einer alternativen Ausführungsform (bei beweglich gelagertem Objektiv) ist das zumindest eine optische Bauteil, auf den der Verstellmechanismus und der Rückstellmechanismus wirken, das Objektiv.

Ein (Ziel)fernrohr wird üblicherweise auch ein Absehen (Fadenkreuz, Zielmarke, Strichmuster od. dgl.) aufweisen, das sich im Strahlengang befindet oder in diesen gespiegelt bzw. hineinprojiziert wird.

Der zumindest eine, um eine Drehachse gelagerte Hebel lenkt die Federkraft um, d.h. die Richtung der auf das optische Bauteil, z.B. das Umkehrsystem, wirkenden Rückstellkraft ist zur Richtung der Federkraft geneigt.

Jene Stelle, an der der Hebel bzw. der Hebelmechanismus auf das optische Bauteil bzw. dessen Gehäuse (Hilfstubus, Fassung, Halterung od. dgl.) einwirkt, befindet sich vorzugsweise in jenem Bereich, der dem Verstellmechanismus gegenüberliegt. Anders ausgedrückt liegen Rückstellmechanismus und Verstellmechanismus einander gegenüber, d.h. befinden sich annähernd in einer Ebene. Der Rückstellmechanismus kann aber auch an einer anderen Position an das Umkehrsystem oder das Objektiv einwirken.

Ein Vorteil der Erfindung liegt darin, dass auch in den maximal ausgelenkten Stellungen des optischen Bauteils immer eine ausreichende Kraft anliegt, wodurch eine zuverlässige Rückstellung gewährleistet wird.

Durch korrektes Auslegen der Hebelverhältnisse und der Federkennlinie kann über einen großen Stellbereich des optischen Bauteils eine annähernd konstante bzw. weniger stark variierende Rückstellkraft erreicht werden. Außerdem ist die Rückstellkraft durch die Hebelverhältnisse und Federrate genau einstellbar bzw. bestimmbar. Als einfache und platzsparende Lösung kann die Erfindung in allen möglichen (Ziel)fernrohren eingesetzt werden, wobei auch eine nachträgliche Nachrüstung möglich ist.

Durch die Umlenkung der Kraft am Hebel, insbesondere bei einem Kipphebel, kann die Feder, die vorzugsweise als Druckfeder ausgebildet ist, quer oder längs zur Längserstreckung des äußeren Gehäuses (Hauptrohr bzw. Haupttubus) verbaut und gegebenenfalls auch geführt werden. Die Erfindung ermöglicht gleichzeitig eine platzsparende Bauweise, wodurch größere Stellwege realisierbar sind.

Gemäß einer bevorzugten Ausführungsform der Erfindung ist der Hebel in Form eines Kipphebels ausgebildet. Dies ermöglicht eine besonders platzsparende und im Hinblick auf eine im Wesentlichen konstante oder zumindest weniger stark variierende Rückstellkraft über einen großen Stellbereich optimale Lösung.

Bevorzugt beträgt die Kraftumlenkung des zumindest einen Hebels zumindest 90°, vorzugsweise zwischen 120° und 150°. Dies erlaubt eine kompakte Integration des Rückstellmechanismus innerhalb des äußeren Gehäuses.

Gemäß einer weiteren Ausführungsform der Erfindung ist der dem optischen Bauteil zugewandte Hebelarm länger als der der Feder zugewandte Hebelarm. Dadurch bleibt die Längen- bzw. Wegänderung der Feder kleiner als der entsprechende Rückstellweg, sodass die Feder in einem linearen Federkennlinienbereich eingesetzt werden kann. Außerdem befindet sich bei dieser Ausführungsform die Drehachse des Hebels näher bei der Feder, sodass sowohl die Lagerung der Feder als auch die Lagerung des Hebels an einem kompakten Bauteil erfolgen kann.

In einer Ausführungsform sitzt das optischen Bauteil, z.B. das Umkehrsystem oder das Objektiv, in einem inneren Gehäuse, das innerhalb des äußeren Gehäuses verstellbar gelagert ist. Das innere Gehäuse kann ein Tubus, eine Fassung, eine Halterung, od. dgl. sein und kann aus einem oder aus mehreren Teilen aufgebaut sein. Die verstellbare Lagerung bezieht sich auf eine Verstellung quer zur optischen Achse, wodurch ein Kippen des optischen Bauteil innerhalb des äußeren Gehäuses ermöglicht wird.

Bevorzugt liegt der Hebel mit einem seiner Arme an der Außenseite des inneren Gehäuses an. Die Kraft wird über einen Berührpunkt bzw. -Berührbereich übertragen. Der Hebel berührt das innere Gehäuse, d.h. liegt lose an diesem an, wodurch die Konstruktion unempfindlich gegenüber einer Schockbelastung (z.B. durch den Rückstoß) wird. Dies erlaubt eine einfache Anbindung des Rückstellmechanismus an das optische Bauteil und erleichtert damit Einbau, Austausch und Wartung. Auch das Nachrüsten bestehender Fernrohre wird dadurch ermöglicht.

Bevorzugt ist der an der Außenseite des inneren Gehäuses anliegende Bereich des Hebels abgerundet. Dies ermöglicht ein Entlanggleiten des Hebelkopfes am inneren Gehäuse ohne größeren Reibungswiderstand.

In einer bevorzugten Variante bildet der an der Außenseite des inneren Gehäuses anliegende Bereich des Hebels eine einfach gekrümmte Oberfläche aus.

In einer alternativen Variante bildet der an der Außenseite des inneren Gehäuses anliegende Bereich des Hebels eine doppelt gekrümmte Oberfläche aus.

In einer weiteren Ausgestaltung weist der Rückstellmechanismus über zumindest 50%, vorzugsweise über zumindest 75% des maximalen Stellbereiches des Verstellmechanismus, besonders bevorzugt über den gesamten Stellbereich des Verstellmechanismus eine im Wesentlichen konstante Rückstellkraft oder eine in diesem Bereich um weniger als 10% variierende Rückstellkraft auf. Dadurch wird eine gleichmäßige und zuverlässige Rückstellung gewährleistet.

Vorzugsweise verläuft die Drehachse des Hebels quer, vorzugsweise in einem Winkel von im Wesentlichen 90°, zur optischen Achse des fernoptischen Gerätes. Im Falle einer Spiralfeder erstreckt sich diese dann im Wesentlichen parallel zur optischen Achse.

In einer alternativen Ausführungsform verläuft die Drehachse des Hebels im Wesentlichen parallel zur optischen Achse des fernoptischen Gerätes. Im Falle einer Spiralfeder erstreckt sich diese dann quer zur optischen Achse.

Bevorzugt ist die Feder axial geführt, vorzugsweise in einer Bohrung. Dies ermöglicht eine optimale Ausnutzung der Federkraft, da der Bewegungsspielraum vorgegeben ist und radiale Ausbuchtungen verhindert werden.

Bevorzugt ist die Feder eine Spiralfeder, wobei vorzugsweise die Feder auf Druck vorgespannt ist. Neben den vorteilhaften Kennlinieneigenschaften einer Spiralfeder kann diese besonders platzsparend untergebracht werden. Letzterer Vorteil vergrößert sich, wenn es sich um eine Druckfeder handelt. Selbstverständlich kann generell jede Art von Druckfeder eingesetzt werden.

Vorzugsweise besitzt die Spiralfeder über den gesamten Stellbereich eine axiale Führung, wodurch eine stabile Konstruktion gegeben ist.

Bevorzugt sind die Feder und der Hebel in einer Baugruppe integriert, die im Ganzen vom fernoptischen Gerät abnehmbar bzw. in das fernoptische Gerät einbaubar ausgebildet ist. Dies ermöglicht nicht nur eine einfache Herstellung und einen unkomplizierten Einbau, sondern erlaubt bei entsprechendem Design auch die Nachrüstung von (Ziel)Fernrohren aller Art.

Bevorzugt umfasst der Rückstellmechanismus ein Lagerelement, in dem die Feder aufgenommen ist und an dem der Hebel drehbar gelagert ist, wobei vorzugsweise das Lagerelement einstückig ausgebildet ist. Dadurch wird eine kompakte und platzsparende Bauweise gewährleistet. Als Elemente des Rückstellmechanismus sind lediglich Feder, Hebel und Lagerelement (gegebenenfalls noch Zwischenelemente an den Enden der Feder) erforderlich.

Bevorzugt ist das Lagerelement an der Innenseite des äußeren Gehäuses befestigt, vorzugsweise angeschraubt. Von außen ist der Rückstellmechanismus nicht sichtbar.

Bevorzugt stützt sich die Feder an einer Wand des äußeren Gehäuses ab. Das Lagerelement kann dadurch noch kleiner gestaltet werden, da an diesem keine Abstützwand für die Feder vorgesehen werden muss.

Bevorzugt umfasst der Verstellmechanismus zwei Elevationsschrauben, die in einem Winkel von im Wesentlichen 90° zueinander angeordnet sind. Dadurch sind Seiten- und Höhenverstellungen möglich.

Bevorzugt wirkt der Hebel in einem Bereich auf den optischen Bauteil, der der Anordnung der beiden Elevationsschrauben symmetrisch gegenüberliegt. Dies ermöglicht unabhängig von der aktuellen Verstellung des optischen Bauteils eine gleichmäßige Rückstellung.

Weitere Varianten sind denkbar: Der Einbau des Kipphebels und der Feder kann quer oder auch längs zum Hauptrohr erfolgen. Die Ausführung des Rückstellmechanismus (z.B. der Kipphebeleinheit) kann eine eigene Baugruppe sein, die (nachträglich) ins fertige Zielfernrohr eingebaut wird oder im Hauptrohr bei der normalen Montage eingebaut wird.

Auch ist es denkbar dass mehrere Rückstellmechanismen (Kipphebeleinheiten) vorgesehen sind. Z.B. könnten zwei solcher Rückstellmechanismen jeweils einer Elevationsschraube gegenüberliegen, sodass für jede Verstellrichtung ein eigener Rückstellmechanismus vorhanden ist.

Zum besseren Verständnis der Erfindung wird diese anhand der nachfolgenden Figuren näher erläutert.

Es zeigen jeweils in stark schematisch vereinfachter Darstellung:
- Fig. 1: ein erfindungsgemäßes fernoptisches Gerät in Form eines Zielfernrohres im Schnitt quer zur optischen Achse;
- Fig. 2: einen erfindungsgemäßen Rückstellmechanismus;
- Fig. 3: ein Zielfernrohr im Schnitt entlang der optischen Achse;
- Fig. 4: eine Ausführungsform der Erfindung;
- Fig. 5: eine weitere Ausführungsform der Erfindung;
- Fig. 6: eine bevorzugte Ausgestaltung des Hebels;
- Fig. 7: eine weitere bevorzugte Ausgestaltung des Hebels;
- Fig. 8: eine Ausführungsform der Erfindung, bei der der Verstellmechanismus und der Rückstellmechanismus auf das Objektiv wirken.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des erfindungsgemäßen fernoptischen Gerätes, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus eines fernoptischen Gerätes dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

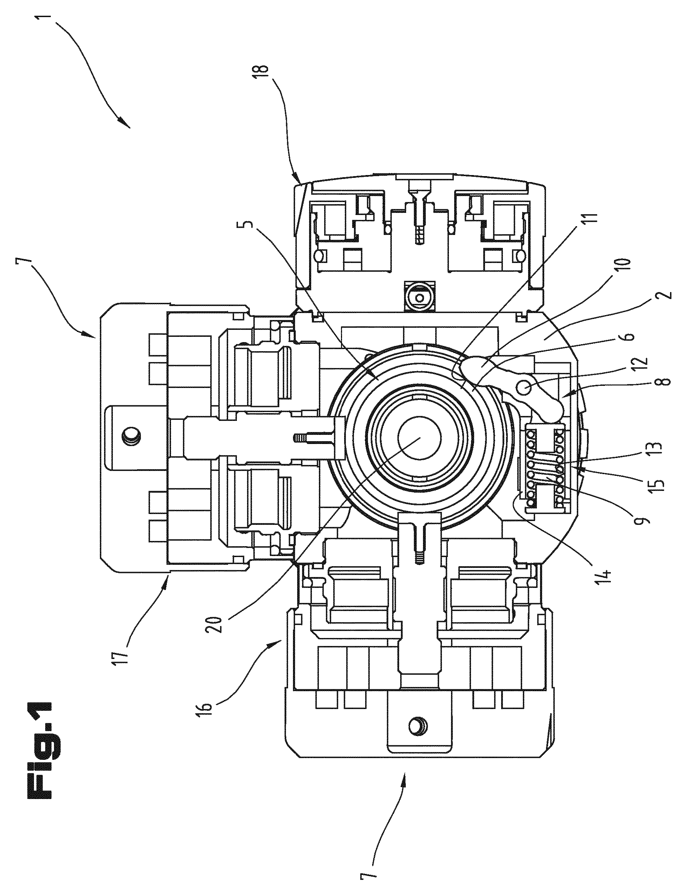

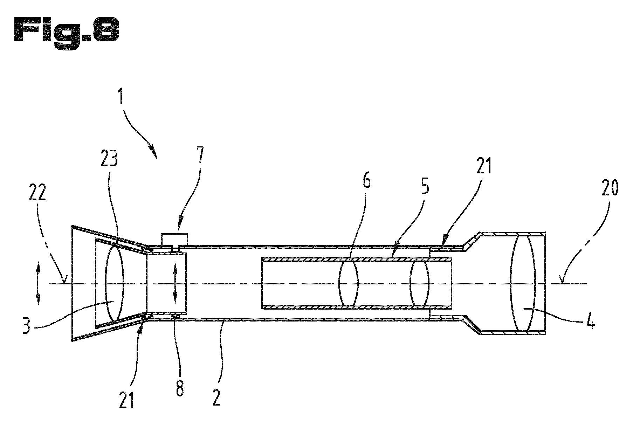

In den Fig. 1 bis 5 wird die Erfindung anhand eines beweglichen Umkehrsystems beschrieben, d.h. hier erfolgt die Verstellung der Visierlinie durch eine Verstellung (Verkippen) des Umkehrsystems. Die in der folgenden Figurenbeschreibung erläuterten Merkmale sind jedoch analog auf eine Ausführungsform (wie in Fig. 8 dargestellt) anzuwenden, bei der anstelle des (oder zusätzlich zum) Umkehrsystems das Objektiv verstellbar (kippbar) gelagert ist, um eine Veränderung der Visierlinie zu erzielen.

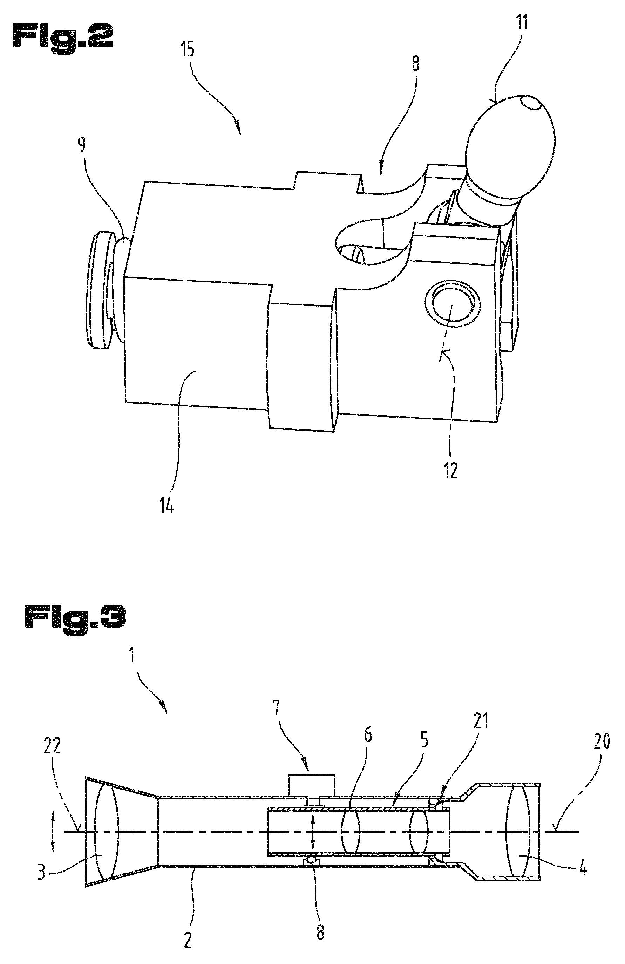

Fig. 3 zeigt in stark schematischer Darstellung ein fernoptisches Gerät 1 in Form eines Zielfernrohres mit einem äußeren Gehäuse 2 (Haupttubus), in dem zwischen Objektiv 3 und Okular 4 ein Umkehrsystem 5 angeordnet ist. Die optischen Elemente des Umkehrsystems 5, z.B. zwei Kittlinsen, sitzen in einem inneren Gehäuse 6 (Hilfstubus). Das Umkehrsystem 5 ist zusammen mit dem inneren Gehäuse 6 als bauliche Einheit im Inneren des äußeren Gehäuses 2 an einem Kugelsitz 21 drehbar bzw. kippbar gelagert. Ein Kippen dieser Einheit wird durch eine Verstellung quer zur optischen Achse 20 erreicht (durch Doppelpfeil angedeutet). Dadurch verändert sich auch die Richtung der Visierlinie 22, die durch den Verstellmechanismus gezielt justiert werden kann.

Zur Verstellung des Umkehrsystems 5 innerhalb des äußeren Gehäuses 2 ist ein auf das Umkehrsystem 5 wirkender Verstellmechanismus 7 vorgesehen, der außerhalb des Fernrohres als Verstellturm dargestellt ist.

Zur Rückstellung des Umkehrsystems 5 entlang des Stellweges (Doppelpfeil) ist ein Rückstellmechanismus 8 vorgesehen, der sich in axialer Richtung vorzugsweise auf derselben Höhe befindet wie der Verstellmechanismus 7.

Fig. 1 zeigt ein erfindungsgemäßes fernoptisches Gerät 1 in Form eines Zielfernrohres im Schnitt quer zur optischen Achse 20 bzw. quer zum Strahlengang. Zu sehen sind zwei Elevationsschrauben 16, 17, die in rechtem Winkel angeordnet sind und unabhängig voneinander über von außen zugängliche Verstelltürme betätigbar sind. Bei einer Betätigung drücken die Elevationsschrauben 16, 17 (z.B. über Vermittlung einer Platte) auf das innere Gehäuse 6 des Umkehrsystems 5. Eine optionale Verstellschraube 18 ermöglicht die Verschiebung einer Linse im Objektiv zur Fokussierung (Parallaxeverstellung).

Im Folgenden wird der Rückstellmechanismus 8 anhand der Fig. 1 und 2 näher erläutert. Dieser umfasst zur Erzeugung der Rückstellkraft zumindest eine Feder 9 und zumindest einen Hebel 10, der die Federkraft der Feder 9 auf das Umkehrsystem 5 überträgt. In einer bevorzugten Ausgestaltung weist der Rückstellmechanismus über zumindest 50%, vorzugsweise über zumindest 75% des maximalen Stellbereiches des Verstellmechanismus, eine um weniger als 10% variierende Rückstellkraft auf. Besonders bevorzugt weist der Rückstellmechanismus 8 über den gesamten Stellbereich des Verstellmechanismus 7 eine im Wesentlichen konstante Rückstellkraft auf. Dazu muss lediglich eine entsprechende Kombination von Feder (Kennlinie) und Hebeldimensionierung gewählt werden.

In der dargestellten Ausführungsform ist der Hebel 10 in Form eines Kipphebels ausgebildet. Die Kraftumlenkung des Hebels 10 (Winkel zwischen der Richtung der Federkraft und der Richtung der Rückstellkraft im Berührpunkt mit dem Umkehrsystem bzw. dessen Gehäuse) beträgt in der Ruhestellung des Umkehrsystems (d.h. symmetrisch bzw. konzentrisch zur optischen Achse) vorzugsweise etwa 135°.

Der am Umkehrsystem 5 bzw. dessen Gehäuse 6 anliegende Hebelarm des Hebels 10 ist länger ist als der mit der Feder 9 zusammenwirkende Hebelarm des Hebels 5.

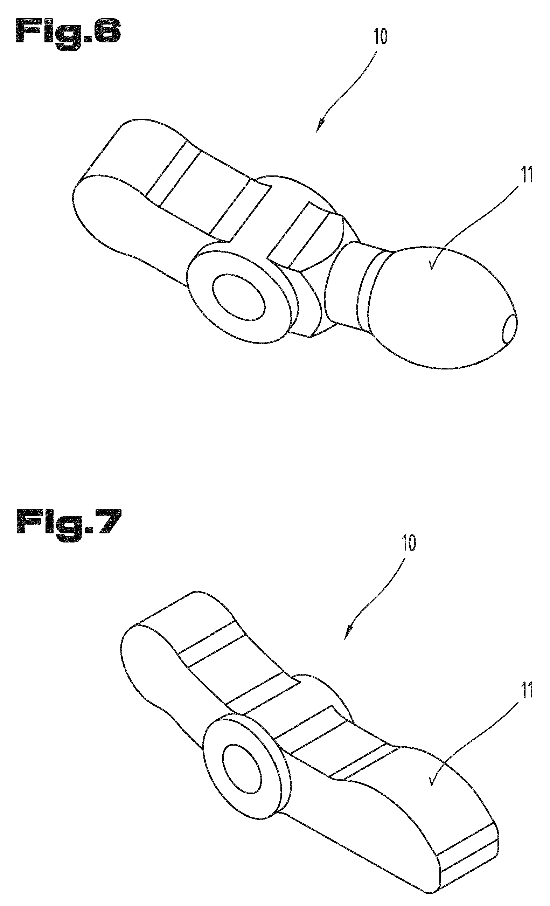

In der dargestellten Ausführungsform liegt der Hebel 10 mit einem seiner Arme an der Außenseite des inneren Gehäuses 6 an, wobei der am Gehäuse 6 anliegende Bereich 11 des Hebels 10 abgerundet ist. In der in Fig. 6 dargestellten Variante bildet der an der Außenseite des inneren Gehäuses 6 anliegende Bereich 11 des Hebels 10 eine doppelt gekrümmte Oberfläche aus. In der alternativen Ausführungsform aus Fig. 7 ist der anliegende Bereich 11 des Hebels 10 eine einfach gekrümmte Oberfläche.

Wie aus Fig. 1 zu sehen ist die Feder 9 axial in einer Bohrung 13 geführt. Selbstverständlich könnte die Feder auch in einer Ausnehmung, einer Rille oder zwischen Schienen geführt sein. Die Feder 9 ist eine Spiralfeder, die auf Druck vorgespannt ist. An den Enden der Feder sind optional jeweils (pufferförmige) Abschlusselemente vorgesehen, um die Kraftübertragung bzw. Krafteinleitung in Richtung Hebel einerseits und Abstützfläche andererseits gleichmäßiger zu gestallten.

Die Feder 9 und der Hebel 10 sind in einer Baugruppe 15 integriert, die im Ganzen vom fernoptischen Gerät 1 abnehmbar und/oder in das fernoptische Gerät 1 einbaubar ausgebildet ist.

Der Rückstellmechanismus 8 umfasst ein Lagerelement 14, in dem die Feder 9 aufgenommen (bzw. geführt) ist und an dem der Hebel 10 um die Drehachse 12 drehbar gelagert ist. Im dargestellten Ausführungsbeispiel ist das Lagerelement 14 aus einem Stück gebildet. Das Lagerelement 14 wiederum ist an der Innenseite des äußeren Gehäuses 2 befestigt, vorzugsweise angeschraubt.

Wie aus Fig. 1 zu sehen stützt sich die Feder 9 an einer Wand des äußeren Gehäuses 2 ab. Alternativ könnte das Lagerelement 14 auch derart ausgebildet sein, dass sich die Feder 9 direkt gegen eine Wand des Lagerelements 14 abstützt.

In der in den Fig. 1, 4 und 5 dargestellten Varianten ist die Drehachse 12 des Hebels 5 im Wesentlichen parallel zur optischen Achse 20 des fernoptischen Gerätes 1 ausgerichtet. Die Feder 10 erstreckt sich quer zur optischen Achse 20.

Alternativ könnte die Drehachse 12 des Hebels 5 auch quer, vorzugsweise in einem Winkel von im Wesentlichen 90°, zur optischen Achse 20 des fernoptischen Gerätes 1 verlaufen. Die Feder 10 könnte sich dann entlang der axialen Richtung erstrecken.

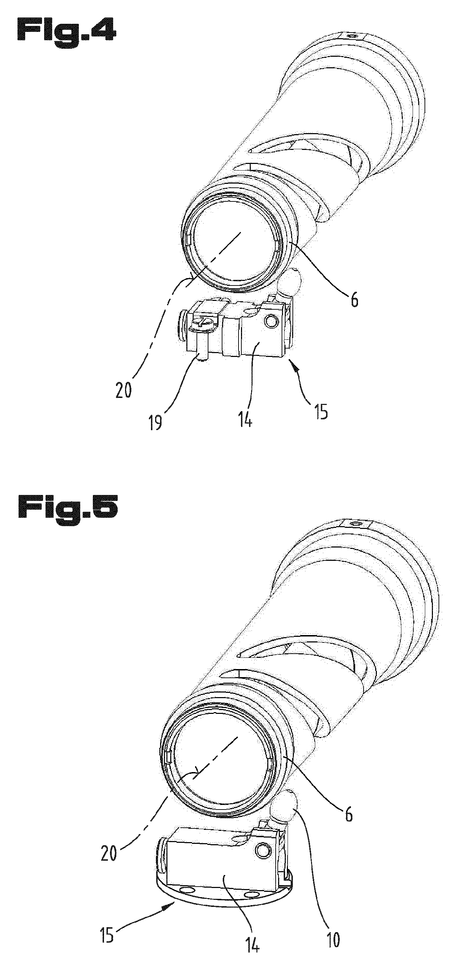

Fig. 4 zeigt in einem Ausschnitt, bei dem das äußere Gehäuse (Haupttubus) weggelassen wurde, eine Möglichkeit der Befestigung des Rückstellmechanismus 8. Befestigungsmittel 19 in Form von zwei Schrauben fixieren das Lagerelement 14 mittels einer Klammer am äußeren Gehäuse.

Fig. 5 zeigt eine alternative Variante der Befestigung. Hier weist das Lagerelement 14 eine Art Bodenplatte auf, in der sich Löcher für Schrauben befinden.

Abschließend sei noch erwähnt, dass in der dargestellten Ausführung der Verstellmechanismus 7 zwei Elevationsschrauben 16, 17 umfasst, die in einem Winkel von im Wesentlichen 90° zueinander angeordnet sind. In der bevorzugten Ausführung von Fig. 1 wirkt der Hebel 10 in einem Bereich auf das Umkehrsystem 5, der der Anordnung der beiden Elevationsschrauben 16, 17 symmetrisch gegenüberliegt.

Selbstverständlich wäre es grundsätzlich auch denkbar nur eine Verstellung in einer Richtung vorzusehen. In diesem Fall könnte der Rückstellmechanismus genau gegenüberliegend der einen Verstelleinrichtung angeordnet sein.

Fig. 8 zeigt in ähnlich schematisierter Darstellung wie Fig. 3 eine alternative Ausgestaltung der Erfindung, bei der das Objektiv 3 innerhalb des äußeren Gehäuses 2 verstellbar gelagert ist, um eine Verstellung der Visierlinie 22 zu erreichen. Das Objektiv 3 wird von einem inneren Gehäuse 23 gehalten und ist durch einen Kugelsitz 21 kippbar. Der Verstellmechanismus 7 zur Verstellung der Visierlinie 22 wirkt hier auf das Objektiv 3 bzw. dessen Gehäuse 23. Ebenso wirkt der Rückstellmechanismus 8 auf das Objektiv 3 bzw. dessen Gehäuse 23. Der Rückstellmechanismus 8 kann genauso ausgebildet sein, wie anhand der Figuren 1 bis 7 in Zusammenwirkung mit dem Umkehrsystem 5 beschrieben.

### Bezugszeichenaufstellung

- 1: Fernoptisches Gerät
- 2: Äußeres Gehäuse
- 3: Objektiv
- 4: Okular
- 5: Umkehrsystem

- 6: Inneres Gehäuse
- 7: Verstellmechanismus
- 8: Rückstellmechanismus
- 9: Feder
- 10: Hebel

- 11: Bereich des Hebels
- 12: Drehachse
- 13: Bohrung
- 14: Lagerelement
- 15: Baugruppe

- 16: Erste Elevationsschraube
- 17: Zweite Elevationsschraube
- 18: Verstellschraube
- 19: Befestigungsmittel
- 20: Optische Achse

- 21: Kugelsitz
- 22: Visierlinie
- 23: Inneres Gehäuse

## Patentansprüche

1. Fernoptisches Gerät (1), insbesondere Zielfernrohr, mit einem äußeren Gehäuse (2), in dem zwischen Objektiv (3) und Okular (4) ein Umkehrsystem (5) angeordnet ist, und mit einem Verstellmechanismus (7) zur Verstellung der Visierlinie (22) durch Verstellung zumindest eines optischen Bauteils (3, 5) innerhalb des äußeren Gehäuses (2) und mit einem auf das optische Bauteil (3, 5) wirkenden Rückstellmechanismus (8), der zur Erzeugung der Rückstellkraft zumindest eine Feder (9) umfasst, **dadurch gekennzeichnet, dass** der Rückstellmechanismus (8) zumindest einen Hebel (10) umfasst, der die Federkraft der Feder (9) auf das optische Bauteil (3, 5) überträgt.

2. Fernoptisches Gerät nach Anspruch 1, **dadurch gekennzeichnet, dass** der Hebel (10) in Form eines Kipphebels ausgebildet ist.

3. Fernoptisches Gerät nach Anspruch 1 oder 2, **dadurch gekennzeichnet, dass** die Kraftumlenkung des zumindest einen Hebels (10) zumindest 90°, vorzugsweise zwischen 120° und 150° beträgt.

4. Fernoptisches Gerät nach einem der vorhergehenden Ansprüche, **dadurch gekennzeichnet, dass** der dem optischen Bauteil (3, 5) zugewandte Hebelarm des Hebels (10) länger ist als der der Feder (9) zugewandte Hebelarm des Hebels (10).

5. Fernoptisches Gerät nach einem der vorhergehenden Ansprüche, **dadurch gekennzeichnet, dass** das optische Bauteil (3, 5) in einem inneren Gehäuse (6, 23) sitzt, das innerhalb des äußeren Gehäuses (2) verstellbar gelagert ist.

6. Fernoptisches Gerät nach Anspruch 5, **dadurch gekennzeichnet, dass** der Hebel (10) mit einem seiner Arme am inneren Gehäuse (6, 23) anliegt.

7. Fernoptisches Gerät nach einem der vorhergehenden Ansprüche, **dadurch gekennzeichnet, dass** der auf das optische Bauteil (3, 5) bzw. dessen Gehäuse (6, 23) wirkende Bereich (11) des Hebels (10) abgerundet ist.

8. Fernoptisches Gerät nach Anspruch 7, **dadurch gekennzeichnet, dass** der auf das optische Bauteil (3, 5) bzw. dessen Gehäuse (6, 23) wirkende Bereich (11) des Hebels (10) eine einfach gekrümmte Oberfläche ausbildet.

9. Fernoptisches Gerät nach Anspruch 7, **dadurch gekennzeichnet, dass** der auf das optische Bauteil (3, 5) bzw. dessen Gehäuse (6, 23) wirkende Bereich (11) des Hebels (10) eine doppelt gekrümmte Oberfläche ausbildet.

10. Fernoptisches Gerät nach einem der vorhergehenden Ansprüche, **dadurch gekennzeichnet, dass** der Rückstellmechanismus (8) über zumindest 50%, vorzugsweise über zumindest 75% des maximalen Stellbereiches des Verstellmechanismus (7), eine um weniger als 10% variierende Rückstellkraft aufweist.

11. Fernoptisches Gerät nach einem der vorhergehenden Ansprüche, **dadurch gekennzeichnet, dass** die Drehachse (12) des Hebels (10) quer, vorzugsweise in einem Winkel von im Wesentlichen 90°, zur optischen Achse des fernoptischen Gerätes (1) verläuft.

12. Fernoptisches Gerät nach einem der vorhergehenden Ansprüche, **dadurch gekennzeichnet, dass** die Drehachse (12) des Hebels (10) im Wesentlichen parallel zur optischen Achse des fernoptischen Gerätes (1) verläuft.

13. Fernoptisches Gerät nach einem der vorhergehenden Ansprüche, **dadurch gekennzeichnet, dass** die Feder (9) axial geführt ist, vorzugsweise in einer Bohrung (13).

14. Fernoptisches Gerät nach einem der vorhergehenden Ansprüche, **dadurch gekennzeichnet, dass** die Feder (9) eine Spiralfeder ist, wobei vorzugsweise die Feder (9) auf Druck vorgespannt ist.

15. Fernoptisches Gerät nach einem der vorhergehenden Ansprüche, **dadurch gekennzeichnet, dass** die Feder (9) und der Hebel (10) in einer Baugruppe (15) integriert sind, die im Ganzen vom fernoptischen Gerät (1) abnehmbar bzw. in das fernoptische Gerät (1) einbaubar ausgebildet ist.

16. Fernoptisches Gerät nach einem der vorhergehenden Ansprüche, **dadurch gekennzeichnet, dass** der Rückstellmechanismus (8) ein Lagerelement (14) umfasst, in dem die Feder (9) aufgenommen ist und an dem der Hebel (10) drehbar gelagert ist, wobei vorzugsweise das Lagerelement (14) einstückig ausgebildet ist.

17. Fernoptisches Gerät nach einem der vorhergehenden Ansprüche, **dadurch gekennzeichnet, dass** das Lagerelement (14) an der Innenseite des äußeren Gehäuses (2) befestigt ist, vorzugsweise angeschraubt.

18. Fernoptisches Gerät nach einem der vorhergehenden Ansprüche, **dadurch gekennzeichnet, dass** sich die Feder (9) an einer Wand des äußeren Gehäuses (2) abstützt.

19. Fernoptisches Gerät nach einem der vorhergehenden Ansprüche, **dadurch gekennzeichnet, dass** der Verstellmechanismus (7) zwei Elevationsschrauben (16, 17) umfasst, die in einem Winkel von im Wesentlichen 90° zueinander angeordnet sind.

20. Fernoptisches Gerät nach Anspruch 19, **dadurch gekennzeichnet, dass** der Hebel (10) in einem Bereich auf das Umkehrsystem (5) wirkt, der der Anordnung der beiden Elevationsschrauben (16, 17) symmetrisch gegenüberliegt.

21. Fernoptisches Gerät nach einem der vorhergehenden Ansprüche, **dadurch gekennzeichnet, dass** das zumindest eine optische Bauteil, auf den der Verstellmechanismus (7) und der Rückstellmechanismus (8) wirken, das Umkehrsystem (5) ist.

22. Fernoptisches Gerät nach einem der vorhergehenden Ansprüche, **dadurch gekennzeichnet, dass** das zumindest eine optische Bauteil, auf den der Verstellmechanismus (7) und der Rückstellmechanismus (8) wirken, das Objektiv (3) ist.

## Claims

1. Long-range optical device (1), in particular a sighting telescope, comprising an outer housing (2) in which a reversal system (5) is disposed between an objective lens (3) and an eyepiece (4), and having an adjusting mechanism (7) for adjusting the sighting line (22) by adjusting at least one optical component (3, 5) inside the outer housing (2), and having a resetting mechanism (8) acting on the optical component (3, 5) comprising at least one spring (9) in order to generate the restoring force, **characterised in that** the resetting mechanism (8) comprises at least one lever (10) which transmits the spring force of the spring (9) to the optical component (3, 5).

2. Long-range optical device according to claim 1, **characterised in that** the lever (10) is in the form of a tilting lever.

3. Long-range optical device according to claim 1 or 2, **characterised in that** the force deflection of the at least one lever (10) is at least 90°, preferably between 120° and 150°.

4. Long-range optical device according to one of the preceding claims, **characterised in that** the lever arm of the lever (10) closest to the optical component (3, 5) is longer than the lever arm of the lever (10) closest to the spring (9).

5. Long-range optical device according to one of the preceding claims, **characterised in that** the optical component (3, 5) is seated in an inner housing (6, 23) which is mounted adjustably inside the outer housing (2).

6. Long-range optical device according to claim 5, **characterised in that** one of the arms of the lever (10) lies against the inner housing (6, 23).

7. Long-range optical device according to one of the preceding claims, **characterised in that** the region (11) of the lever (10) acting on the optical component (3, 5) or its housing (6, 23) is rounded.

8. Long-range optical device according to claim 7, **characterised in that** the region (11) of the lever (10) acting on the optical component (3, 5) or its housing (6, 23) has a single curved surface.

9. Long-range optical device according to claim 7, **characterised in that** the region (11) of the lever (10) acting on the optical component (3, 5) or its housing (6, 23) has a double curved surface.

10. Long-range optical device according to one of the preceding claims, **characterised in that** the resetting mechanism (8) has a restoring force which varies by less than 10% over at least 50%, preferably over at least 75%, of the maximum range of adjustment of the adjusting mechanism (7).

11. Long-range optical device according to one of the preceding claims, **characterised in that** the pivot axis (12) of the lever (10) extends transversely to the optical axis of the long-range optical device (1), preferably at an angle of essentially 90°.

12. Long-range optical device according to one of the preceding claims, **characterised in that** the pivot axis (12) of the lever (10) extends essentially parallel with the optical axis of the long-range optical device (1).

13. Long-range optical device according to one of the preceding claims, **characterised in that** the spring (9) is axially guided, preferably in a bore (13).

14. Long-range optical device according to one of the preceding claims, **characterised in that** the spring (9) is a helical spring, wherein preferably the spring (9) is pre-stressed by compression.

15. Long-range optical device according to one of the preceding claims, **characterised in that** the spring (9) and the lever (10) are integrated within a unit (15) that can be removed from the long-range optical device (1) and installed in the long-range optical device (1) as a whole.

16. Long-range optical device according to one of the preceding claims, **characterised in that** the resetting mechanism (8) comprises a mounting element (14) in which the spring (9) is accommodated and on which the lever (10) is mounted so as to be pivotable, wherein preferably the mounting element (14) is made from a single piece.

17. Long-range optical device according to one of the preceding claims, **characterised in that** the mounting element (14) is affixed to the internal face of the outer housing (2), preferably by screwing.

18. Long-range optical device according to one of the preceding claims, **characterised in that** the spring (9) is supported on a wall of the outer housing (2).

19. Long-range optical device according to one of the preceding claims, **characterised in that** the adjusting mechanism (7) comprises two elevation screws (16, 17) disposed at an angle of essentially 90° with respect to one another.

20. Long-range optical device according to claim 19, **characterised in that** the lever (10) acts on the reversal system (5) in a region lying symmetrically opposite the arrangement of the two elevation screws (16, 17).

21. Long-range optical device according to one of the preceding claims, **characterised in that** the at least one optical component on which the adjusting mechanism (7) and resetting mechanism (8) act is the reversal system (5).

22. Long-range optical device according to one of the preceding claims, **characterised in that** the at least one optical component on which the adjusting mechanism (7) and resetting mechanism (8) act is the objective lens (3).

## Revendications

1. Instrument de télé-optique (1), en particulier lunette de visée, avec un boîtier extérieur (2), dans lequel un système d'inversion (5) est disposé entre l'objectif (3) et l'oculaire (4), et avec un mécanisme de réglage (7) pour le réglage de la ligne de visée (22) par le réglage d'au moins un composant optique (3, 5) à l'intérieur du boîtier extérieur (2) et avec un mécanisme de rappel (8), agissant sur le composant optique (3, 5), qui comprend au moins un ressort (9) pour la production de la force de rappel, **caractérisé en ce que** le mécanisme de rappel (8) comprend au moins un levier (10) qui transmet la force de ressort du ressort (9) au composant optique (3, 5).

2. Instrument de télé-optique selon la revendication 1, **caractérisé en ce que** le levier (10) est constitué en forme de levier de basculement.

3. Instrument de télé-optique selon la revendication 1 ou 2, **caractérisé en ce que** la déviation de force du levier (10) au moins au nombre de un est au moins égale à 90°, de préférence comprise entre 120° et 150°.

4. Instrument de télé-optique selon l'une des revendications précédentes, **caractérisé en ce que** le bras de levier du levier (10) tourné vers le composant optique (3, 5) est plus grand que le bras de levier du levier (10) tourné vers le ressort (9).

5. Instrument de télé-optique selon l'une des revendications précédentes, **caractérisé en ce que** le composant optique (3, 5) est situé dans un boîtier (6, 23) intérieur qui est supporté de façon déplaçable à l'intérieur du boîtier extérieur (2).

6. Instrument de télé-optique selon la revendication 5, **caractérisé en ce que** le levier (10) est, par un de ses bras, adjacent au boîtier (6, 23) intérieur.

7. Instrument de télé-optique selon l'une des revendications précédentes, **caractérisé en ce que** la zone (11) du levier (10) agissant sur le composant optique (3, 5) ou respectivement sur son boîtier (6, 23) est arrondie.

8. Instrument de télé-optique selon la revendication 7, **caractérisé en ce que** la zone (11) du levier (10) agissant sur le composant optique (3, 5) ou respectivement sur son boîtier (6, 23) constitue une surface à simple courbure.

9. Instrument de télé-optique selon la revendication 7, **caractérisé en ce que** la zone (11) du levier (10) agissant sur le composant optique (3, 5) ou respectivement sur son boîtier (6, 23) constitue une surface à double courbure.

10. Instrument de télé-optique selon l'une des revendications précédentes, **caractérisé en ce que** le mécanisme de rappel (8) présente une force de rappel variant de moins de 10 % sur au moins 50 %, de préférence sur au moins 75 % de la zone de réglage maximale du mécanisme de réglage (7).

11. Instrument de télé-optique selon l'une des revendications précédentes, **caractérisé en ce que** l'axe de rotation (12) du levier (10) est oblique, en particulier en formant un angle de essentiellement 90 °, par rapport à l'axe optique de l'instrument de télé-optique (1).

12. Instrument de télé-optique selon l'une des revendications précédentes, **caractérisé en ce que** l'axe de rotation (12) du levier (10) est essentiellement parallèle à l'axe optique de l'instrument de télé-optique (1).

13. Instrument de télé-optique selon l'une des revendications précédentes, **caractérisé en ce que** le ressort (9) est guidé axialement, de préférence dans un alésage (13).

14. Instrument de télé-optique selon l'une des revendications précédentes, **caractérisé en ce que** le ressort (9) est un ressort hélicoïdal, le ressort (9) étant de préférence prétendu en pression.

15. Instrument de télé-optique selon l'une des revendications précédentes, **caractérisé en ce que** le ressort (9) et le levier (10) sont intégrés dans un groupe de construction (15) qui est constitué au total de façon à pouvoir être enlevé de l'instrument de télé-optique (1) ou à pouvoir être monté dans l'instrument de télé-optique (1).

16. Instrument de télé-optique selon l'une des revendications précédentes, **caractérisé en ce que** le mécanisme de rappel (8) comprend un élément de support (14) dans lequel est logé le ressort (9) et sur lequel le levier (10) est supporté en rotation, l'élément de support (14) étant de préférence constitué d'une seule pièce.

17. Instrument de télé-optique selon l'une des revendications précédentes, **caractérisé en ce que** l'élément de support (14) est fixé sur le côté intérieur du boîtier extérieur (2), de préférence par vissage.

18. Instrument de télé-optique selon l'une des revendications précédentes, **caractérisé en ce que** le ressort (9) s'appuie sur une paroi du boîtier extérieur (2).

19. Instrument de télé-optique selon l'une des revendications précédentes, **caractérisé en ce que** le mécanisme de réglage (7) présente deux vis d'élévation (16, 17) qui sont disposées en formant entre elles un angle de essentiellement 90°.

20. Instrument de télé-optique selon la revendication 19, **caractérisé en ce que** le levier (10) agit sur le système d'inversion (5) dans une zone qui est opposée symétriquement à l'agencement des deux vis d'élévation (16, 17).

21. Instrument de télé-optique selon l'une des revendications précédentes, **caractérisé en ce que** le composant optique au moins au nombre de un sur lequel agissent le mécanisme de réglage (7) et le mécanisme de rappel (8) est le système d'inversion (5).

22. Instrument de télé-optique selon l'une des revendications précédentes, **caractérisé en ce que** le composant optique au moins au nombre de un sur lequel agissent le mécanisme de réglage (7) et le mécanisme de rappel (8) est l'objectif (3).
